# EUROPÄISCHE PATENTSCHRIFT

(11) **EP 2 284 234 B1**
(45) Veröffentlichungstag und Bekanntmachung des Hinweises auf die Patenterteilung: **29.08.2012**
(21) Anmeldenummer: 09166237.9
(22) Anmeldetag: 23.07.2009
(51) Int. Cl.: C09D 183/08, C09D 5/08

(54) **Kondensierbare, Wasser enthaltende Zusammensetzung zur Behandlung von Metalloberflächen**
Condensable composition containing water for treating metal surfaces
Composition condensable contenant de l'eau destinée au traitement de surfaces de métal

(43) Veröffentlichungstag der Anmeldung: 16.02.2011
(73) Patentinhaber: Henkel AG & Co. KGaA, 40589 Düsseldorf (DE); Voestalpine Stahl GmbH, 4020 Linz (AT); Schiemer, Marion, Wiener Neustadt (AT); Fafilek, Günter, 2102 Bisamberg (AT); Fleischhandl, Martin, 4261 Rainbach i.M. (AT); Wolpers, Michael, 40699 Erkrath (DE)
(72) Erfinder: Schiemer, Marion, 2700 Wiener Neustadt (AT); Fafilek, Günter, Dr., 2102 Bisamberg (AT); Fleischhandl, Martin, 4261 Rainbach i.M. (AT); Wolpers, Michael, Dr., 40699 Erkrath (DE)

(56) Entgegenhaltungen:
- EP-A- 0 260 661
- EP-A- 1 333 107
- WO-A-00/46310
- JP-A- 56 125 462
- JP-A- 56 125 464
- SK-B6- 277 899
- US-A1- 2004 094 235

## Beschreibung

Die vorliegende Erfindung betrifft eine kondensierbare, Wasser enthaltende Zusammensetzung für die Behandlung von Metalloberflächen, insbesondere Metallband, zur Erhöhung der Korrosionsbeständigkeit und Umformbarkeit auf Basis einer Mischung von Organosilanen enthaltend zusätzlich zumindest ein Polydiol sowie mindestens einen einwertigen Alkohol. Die Erfindung betrifft ferner ein Verfahren zur Beschichtung einer Metalloberfläche mit einer erfindungsgemäßen Zusammensetzung, insbesondere mittels einer Dry-in-Place Applikation Metallband kann in einem solchen erfindungsgemäßen Verfahren beschichtet werden.

Es ist bekannt, Metallbänder, die einer Umformung und insbesondere einem Tiefziehprozess unterworfen werden, noch beim Hersteller einer Beölung zu unterwerfen. Eine derartige Ölschicht ist für die Dauer des Transports zudem ein Korrosionsschutz für die Bandoberflache. Ohne derartige Ölschichten auf dem Band ist eine qualitativ hochwertige Umformung nicht möglich. Der Nachteil derartiger herkömmlicher Ölbeschichtungen ist jedoch, dass das Kaltband nach der Umformung gereinigt werden muss, um eine für nachfolgende Lackierungen taugliche Oberflache zu schaffen. Zudem ist die Verwendung von Ölen aus Umweltgründen nachteilig. Um solche Nachteile zu überwinden und trotzdem eine gute Schmierwirkung zu erzielen wurde schon versucht, Wachse in Schichten von 1 bis 2 µm schmelzflüssig aufzubringen. Bei derartigen Beschichtungen ist jedoch von Nachteil, dass diese nach dem Umformen ebenfalls wieder entfernt werden müssen, da sie nicht überlackierbar sind und zudem einen zumeist nicht ausreichenden Korrosionsschutz bieten. Aus diesen Gründen werden im Stand der Technik auch vorphosphatierte Metallbänder von Stahl oder verzinktem Stahl eingesetzt, wobei die Beschichtung zudem einen organisch polymeren Anteil, bspw. aus vernetzten Polyacrylat, Polyamiden, Epoxy- und Polyurethanharzen oder Polyethylenwachsen, ausweist, so dass auf diese Weise beschichtete Metallbänder das gewünschte Umformverhalten zeigen.

Derartige anorganisch-organische Hybridsysteme werden beispielsweise in der DE 102005027568 offenbart, in denen ein Beschichtungsmittel angegeben ist, das ein
- Polyetherwachs und
- mindestens ein wasserlösliches, saure Gruppen umfassendes Polymer X und mindestens ein Metallion umfasst, wobei
   - das Polymer X mindestens 0,6 mol Säuregruppen / 100 g des Polymers aufweist,
   - der pH-Wert der Formulierung nicht mehr als 5 beträgt,
   - die Menge des Polymers X 1 bis 40 Gew. % bezogen auf die Menge aller Komponenten der Formulierung beträgt,
   - es sich bei dem Metallion um mindestens eines ausgewählt aus der Gruppe von Zn²⁺, Ca²⁺, Mg²⁺ und Al³⁺ handelt, und
   - die Menge der Metallionen 0,01 Gew. % bis 25 Gew. % bezogen auf das Polymer X beträgt.

Ein anderer Ansatz besteht im Stand der Technik darin, aushärtbare Beschichtungsmittel enthaltend vernetzbare Metallorganyle einzusetzen.

So lehrt die DE 19923118.4-44 ein chromfreies Korrosionsschutzmittel, das als Beschichtung auf Metallband das Ausstanzen und Umformen zu metallischen Bauteilen erleichtern soll, umfassend
- mindestens eine Titan-, Silicium- und/oder Zirkoniumverbindung der allgemeinen Formel (I) 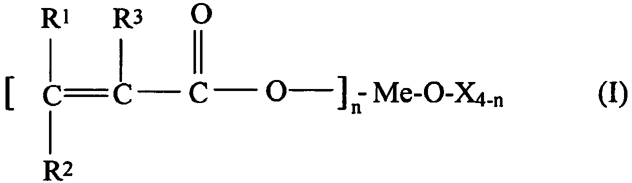 worin R1 und/oder R2 H, C1 bis C12-Alkyl, Aralkyl oder die Gruppe -CO-O-Y,
   R3=H oder C1 bis C12-Alkyl,
   Me = ein Titan-, Silicium- oder Zirkoniumion,
   X = H, C1 bis C12-Alkyl, Aryl oder Aralkyl, Alkoxyl, Aroxyl, Sulfonyl, Phosphat, Pyrophosphat,
   Y = H, C1 bis C12-Alkyl oder Me, und n = 0 bis 4 ist,
- mindestens ein weiteres olefinisch ungesättigtes Comonomer mit mindestens zwei olefinisch ungesättigten Doppelbindungen pro Molekül, sowie
- mindestens einen Initiator zur radikalischen und/oder kationischen Polymerisation.

Zur Verbesserung der Lackhaftung schlägt die DE 69511905 die Erstbeschichtung von Metalloberflächen mit einer wässrigen Lösung von Amino- und/oder Epoxy-modifizierten Organosilanen vor, wobei eine Trockenfilmdicke des kondensierten Silannetzwerkes von unter 2,5 µm zu realisieren ist.

Der Nachteil einer solchen im Wesentlichen aus Organosilanen bestehenden Zusammensetzung liegt in der niedrigen mechanischen Flexibilität des Silannetzwerkes, die eine unzureichende Umformbarkeit in Tiefziehprozessen bedingt. Zusätzlich erschweren hohe Trocknungstemperaturen, die für die Kondensation der Organosilane zu einem polymeren Netzwerk benötigt werden, den Einsatz solcher Zusammensetzungen in Metallbandanlagen mit hohen Bandgeschwindigkeiten.

Die WO 00/46310 lehrt den Korrosionsschutz von Metalloberflächen zu verbessern, indem Wasser enthaltende Zusammensetzungen, die eine Mischung von kondensierbaren Amino-substituierten Silanen und Polysilanen darstellen, auf die Metalloberflächen aufgebracht und getrocknet werden.

Die JP 56125464 hat die Ausbildung verschleißresistenter Beschichtungen auf Metalloberflächen mit Hilfe Silan-haltiger Zusammensetzungen zum Gegenstand und lehrt Zusammensetzungen enthaltend Epoxid-substituierte Silane, die als ausgehärtete Beschichtung eine hohe Oberflächenhärte aufweisen. Aus der JP56125464 erfährt der Fachmann, dass zusätzliche Mengen an Polydiolen in den dort beschriebenen Zusammensetzungen die Oberflächenhärte herabsetzen und die Elastizität der Beschichtung auf Metalloberflächen erhöhen.

Die Aufgabe der vorliegenden Erfindung besteht demnach darin, eine Zusammensetzung für eine erste korrosionsschützende Vorbehandlung von Metallbandoberflächen auf Basis von kondensierbaren Organosilanen bereitzustellen, die zudem die Umformbarkeit des Kaltbandes, insbesondere in Tiefziehprozessen, ohne das Aufbringen weiterer Mittel gewährleistet. Darüber hinaus soll die Zusammensetzung speziell dafür geeignet sein, um in konventionellen Auftragsverfahren als Nassfilm auf das Metallband aufgebracht und eingetrocknet zu werden ("Dry-in-Place" Verfahren), und dabei gut überlackierbare Beschichtungen erzeugen.

Dieses Aufgabenspektrum wird von einer Wasser enthaltenden Zusammensetzung umfassend
a) mindestens ein Organosilan mit ein bis drei in Wasser hydrolysierbaren Substituenten und ein bis drei in Wasser nicht hydrolysierbaren Substituenten, wobei zumindest ein nicht hydrolysierbarer Substituent zumindest eine Amino-Funktion aufweist und die Gesamtzahl der Substituenten am Siliziumatom der Organosilane 4 ist,
b) mindestens ein Organosilan mit ein bis drei in Wasser hydrolysierbaren Substituenten und ein bis drei in Wasser nicht hydrolysierbaren Substituenten, die keine Organosilane gemäß Komponente a) sind, wobei die Gesamtzahl der Substituenten am Siliziumatom der Organosilane der Komponente b) 4 ist und wobei die in Wasser hydrolysierbaren Substituenten der Organosilane der Komponente b) ausgewählt sind aus Alkoxygruppen und/oder Halogenatomen und die in Wasser nicht hydrolysierbaren Substituenten der Organosilane der Komponente b) ausgewählt sind aus Alkyl- und/oder Arylgruppen und/oder Fluoroalkylgruppen und/oder Fluoroarylgruppen, wobei zumindest ein nicht hydrolysierbarer Substituent Methacryl-substituiert ist,
c) zumindest 5 Gew.%, aber nicht mehr als 40 Gew.% mindestens eines Polydiols ausgewählt aus Polyetherdiolen, Polyesterdiolen und/oder Polycarbonatdiolen,
d) zumindest 25 Gew.% mindestens einen einwertigen Alkohol mit einer Molmasse von weniger als 100 g/mol,
wobei das molare Verhältnis von Komponenten a) zu Komponenten b) nicht kleiner als 1 : 1, aber nicht größer als 3 : 1 ist und der Gesamtanteil an Komponenten a) und b) an der Zusammensetzung zumindest 10 Gew.%, aber nicht mehr als 60 Gew.% beträgt.

Die erfindungsgemäße Zusammensetzung zeichnet sich durch eine gute Solstabilität aufgrund einer langsamen Kondensationsreaktion der Silankomponenten a) und b) bei Raumtemperatur und damit für die technische Applikation derselben auch durch ausreichende Topfzeiten aus. Anderseits verleiht die Zusammensetzung als eine auf Metallband getrocknete Beschichtung diesem ein gutes Umformverhalten, beispielsweise in Tiefziehprozessen beim Kaltformen. Eine getrocknete Beschichtung der erfindungsgemäßen Zusammensetzung enthaltend die kondensierbaren Komponenten a) und c) besteht aus einem über das Polydiol hoch vernetzten Silan-Gerüst, das dem Metallband neben der Umformbarkeit auch eine temporäre Korrosionsbeständigkeit verleiht.

Für eine schnelle Kinetik der Kondensationsreaktion bei Applikationsbedingungen und eine damit verbundene hohe Vernetzung des Organosilans mit dem Polydiol sind solche Organosilane gemäß Komponente a) in der erfindungsgemäßen Zusammensetzung bevorzugt, deren in Wasser hydrolysierbare Substituenten ausgewählt sind aus Alkoxygruppen, besonders bevorzugt Methoxy- und/oder Ethoxygruppen, und/oder Polyalkoxygruppen und/oder Halogenatomen, besonders bevorzugt Chloratomen, und deren in Wasser nicht hydrolysierbare Substituenten ausgewählt sind aus Alkyl-Gruppen, wobei zumindest ein nicht hydrolysierbarer Substituent eine Amino-Gruppe aufweist. Ausgewählte Vertreter der Organosilane gemäß Komponente a) sind demnach beispielsweise
3-Aminopropyl-trimethoxysilan,
[3-(Methylamino)propyl]trimethoxysilan,
[3-(Phenylamino)propyl]trimethoxysilan,
[3-(Diethylamino)propyl]trimethoxysilan,
3-[2-(2-Aminoethylamino)ethylamino]propyl-trimethoxysilan,
N-[3-(Trimethoxysilyl)propyl]ethylendiamin,
1-[3-(Trimethoxysilyl)propyl]harnstoff,
Bis(3-(methylamino)propyl)trimethoxysilane
sowie die entsprechenden mono- und di-alkoxylierten Silane und die entsprechenden teilweise oder vollständig ethoxylierten Silane.

Überraschenderweise zeigt sich, das die dialkoxylierten Organosilane gemäß Komponente a) in einer erfindungsgemäßen Zusammensetzung getrocknete, vernetzte Beschichtungen erzeugen, deren Umformbarkeit nochmals erhöht wird, ohne dass die Korrosionsbeständigkeit nachteilig beeinflusst wird. Diese diethoxylierten Organosilane gemäß Komponente a) sind daher besonders bevorzugt, wenn die Umformbarkeit das entscheidende Kriterium für die Eigenschaften der getrockneten, kondensierten Zusammensetzung auf Metallband ist, da insbesondere die Trocknungszeit der Zusammensetzung auf Metallband etwas länger als die der trialkoxylierten Silane ist. Gemische von di- und trialkoxylierten Organosilanen gemäß Komponente a) stellen daher einen guten Kompromiss für erfindungsgemäße Zusammensetzungen dar, die eine hohe Umformbarkeit des beschichteten Metallbandes bei kurzen Trocknungszeiten der Zusammensetzung liefern.

Als besonders geeignete Vertreter gelten die ethoxylierten Silane, da diese nach dem Auftragen der erfindungsgemäßen Zusammensetzung bei der Vernetzung der Reaktionskomponenten a) und c) das hinsichtlich der Betriebs- und Umweltsicherheit weniger toxische Ethanol freisetzen.

Insbesondere bevorzugt sind die mono-, di-, und/oder tri-ethoxylierten 3-Aminopropylsilane, speziell das 3-Aminopropyl-triethoxysilan, als Organosilan gemäß Komponente a) der erfindungsgemäßen Zusammensetzung.

Die vorliegende Erfindung zeichnet sich insbesondere durch lange Topfzeiten der kondensierbaren Zusammensetzung aus, so dass Zusammensetzungen mit konkretem Anforderungsprofil formuliert werden können, ohne dass die Trocknungseigenschaften der Zusammensetzung oder die Umformbarkeit der beschichteten Metallbänder nachteilig beeinflusst werden. So wurde festgestellt, dass durch die Anwesenheit von Organosilanen gemäß Komponente b), üblicherweise die Korrosionsbeständigkeit, Hydrolysebeständigkeit und/oder Lackhaftung der mit der erfindungsgemäßen Zusammensetzung beschichteten und getrockneten Metalloberfläche verbessert wird.

Als Organosilane gemäß Komponente b) sind solche Vertreter bevorzugt, deren in Wasser hydrolysierbare Substituenten ausgewählt sind aus Methoxy- und/oder Ethoxygruppen, und/oder Chloratomen und deren in Wasser nicht hydrolysierbare Substituenten ausgewählt sind aus Methyl-, Ethyl- oder Propylgruppen. Hierdurch wird zusätzlich eine gute Überlackierbarkeit der als Beschichtung auf Metallband vernetzten bzw. kondensierten erfindungsgemäßen Zusammensetzung mit thermisch oder aktinisch aushärtenden Lacksystemen erzielt.

Der pH-Wert der erfindungsgemäßen Zusammensetzung liegt vorzugsweise im Bereich von 5-9, besonders bevorzugt im Bereich von 6-8. Zusammensetzungen, die alkalischer oder saurer eingestellt sind, neigen zu einer beschleunigten Kondensation der Silankomponenten und damit zu niedrigen Topfzeiten, die aus verfahrenstechnischer Sicht nachteilig sind.

Ferner sind solche erfindungsgemäßen Zusammensetzungen umfassend Organosilane gemäß Komponenten a) und b) bevorzugt, die zumindest einen solchen Anteil an aminofunktionalisierten Organosilanen gemäß Komponente a) bezogen auf den Gesamtgehalt an Organosilanen enthalten, dass bei Auftragung einer Nassfilmdicke der Zusammensetzung von 5 g/m² eine Trocknungstemperatur der Zusammensetzung bei einer Trocknungszeit von nicht mehr als 10 Sekunden von nicht mehr als 100 °C resultiert. Die Trocknungstemperatur ist dabei erfindungsgemäß diejenige Temperatur, die ausreicht bei den zuvor genannten Bedingungen eine solche Kondensation bzw. Vernetzung der Reaktivkomponenten zu bewirken, dass nach dem Verpressen eines unbeschichteten Bleches mit dem Blech, das die ausgehärtete Beschichtung trägt, bei einem Anpressdruck von 10 kN/m² für 10 Sekunden auf dem unbeschichteten Blech eine Änderung der Silizium-Auflage von nicht mehr als 5 mg/m², vorzugsweise keine Zunahme der Silizium-Auflage festgestellt wird. Entsprechend ist die Trocknungszeit erfindungsgemäß diejenige Zeit, die bei vorgegebener Temperatur benötigt wird, um eine ausgehärtete Beschichtung zu erlangen, die im zuvor beschriebenen Anpresstest mit einem unbeschichteten, aber gleichartigen Blech identische Ergebnisse liefert. Die Siliziumauflage wird dabei mittels Röntgenfluoreszenzanalyse bestimmt, wobei auf einer Blechoberfläche von 100 cm² zumindest 10 Messpunkte mit gleichem kürzesten Abstand voneinander liegen und die Siliziumauflage durch Mittelwertbildung der Messpunkte festgelegt wird.

Mit erfindungsgemäßen Zusammensetzungen werden Trocknungstemperaturen von nicht mehr als 100 °C erzielt, insbesondere dann, wenn das molare Verhältnis von Amino-funktionalisierten Organosilanen gemäß Komponente a) zu Organosilanen gemäß Komponente b) nicht kleiner als 5 : 4 ist. Durch die niedrigen Trocknungstemperaturen von nicht mehr als 100 °C wird gewährleistet, dass bei der sogenannten "In-Line Applikation" der Zusammensetzung, die im Prozess der Metallbandherstellung integriert ist und diesem unmittelbar nachfolgt, eine schnelle Trocknung bzw. Aushärtung der Zusammensetzung auf dem Metallband innerhalb weniger Sekunden erfolgt.

Erfindungsgemäß sind auch die Anforderungen bezüglich einer hinreichenden Korrosionsbeständigkeit der mit der ausgehärteten Zusammensetzung beschichteten Metallbänder sowie deren gute Überlackierbarkeit erfüllt. Hier zeigt sich wiederum, dass solche erfindungsgemäßen Zusammensetzungen bevorzugt sind, deren molares Verhältnis von Amino-funktionalisierten Organosilanen gemäß Komponente a) zu Organosilanen gemäß Komponente b) nicht größer als 2 : 1 ist.

Der massenbezogene Gesamtanteil der Organosilane gemäß den Kompenten a) und b) an der erfindungsgemäßen Zusammensetzung ist vorzugsweise nicht kleiner als 30 Gew.-% ist, aber überschreitet einen Gesamtanteil von vorzugsweise 50 Gew-%,nicht. Ein Anteil an diesen Organosilanen, der höher ist als der erfindungsgemäße, liefert als vernetzte bzw. kondensierte Beschichtung der Zusammensetzung auf Metallband bereits spröde Beschichtungen, die für die Umformung des Metallbands weniger geeignet sind. Die Kondensation der reaktiven Komponenten bestehend aus Organosilanen a) und b) einerseits und Polydiolen andererseits unter hoher Vernetzung der Komponenten erfordert jedoch einen Mindestanteil an Organosilanen, so dass unterhalb der erfindungsgemäßen Anteile an Organosilanen a) und b) weniger vernetzte Beschichtungen resultieren, die dem Metallband nicht die maximal mögliche Korrosionsbeständigkeit verleihen.

Erfindungsgemäß sind solche Polydiole gemäß Komponente c) der erfindungsgemäßen Zusammensetzung bevorzugt, in denen die beiden Hydroxyl-Gruppen durch eine Hauptkette enthaltend zumindest 8 Kohlenstoffatome, besonders bevorzugt zumindest 14 Kohlenstoffatome, aber nicht mehr als 40 Kohlenstoffatome, besonders bevorzugt nicht mehr als 30 Kohlenstoffatome verbunden sind, wobei die Hauptkette die kürzeste von Atomen des Polydiols geknüpfte Verbindung zwischen den Hydroxyl-Gruppen darstellt. Durch diese zusätzliche Bedingung werden solche erfindungsgemäßen Zusammensetzungen erhalten, die auf Metallband aufgetragen im kondensierten bzw. getrockneten Zustand sowohl einen genügenden Korrosionsschutz als auch die erforderliche Umformbarkeit vermitteln. Die Einschränkung entspricht daher einem Kompromiss, der dem Aufgabenspektrum der vorliegenden Erfindung geschuldet ist, und der darauf beruht, dass die Umformbarkeit einer kondensierten Zusammensetzung auf Metallband mit steigender Kettenlänge des Polydiols zunimmt, aber sich gleichzeitig die Korrosionsbeständigkeit erniedrigt. Eine Auswahl bezüglich der verwendeten Polydiole in einer erfindungsgemäßen Zusammensetzung ist also innerhalb dieser vorgegebenen bevorzugten Grenzen unter Berücksichtigung des geforderten Eigenschaftsprofils einer Beschichtung aus der kondensierten erfindungsgemäßen Zusammensetzung auf Metallband für den Einzelfall vorzunehmen.

Die Umformbarkeit und der Korrosionschutz, den eine vernetzte bzw. kondensierte Beschichtung der erfindungsgemäßen Zusammensetzung dem Metallband verleiht, kann weiterhin dadurch erhöht werden, dass als Polydiol gemäß Komponente c) der erfindungsgemäßen Zusammensetzung Polyetherdiole der allgemeinen Formel (I) enthalten sind. 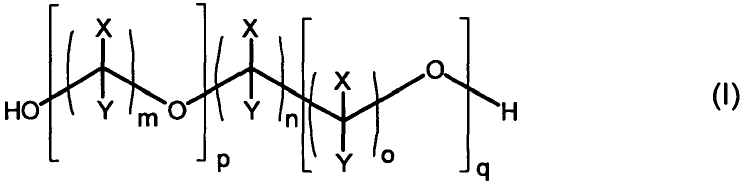 wobei die Reste X, Y jeweils unabhängig voneinander ausgewählt sind aus Wasserstoff, Fluor, Alkyl- oder Fluoroalkyl-Gruppen mit nicht mehr als 6 Kohlenstoff-Atomen,
wobei m und o ganze natürliche Zahlen größer als Null, aber nicht größer als 4 sind,
wobei n eine ganze natürliche Zahl nicht größer als 30 ist,
wobei p und q ganze natürliche Zahlen größer als Null, aber nicht größer als 30 sind.

Besonders bevorzugt sind dabei solche erfindungsgemäßen Zusammensetzungen, in denen als Komponente c) zumindest 50 Gew.-% aller Polyetherdiole, insbesondere sämtliche Polyetherdiole der Komponente c) ausgewählt sind aus Polyalkylenglykolen, insbesondere Polyethylen- und/oder Polypropylenglykolen, und/oder solche erfindungsgemäßen Zusammensetzungen, in denen zumindest 50 Gew.-% aller Polyetherdiole, insbesondere sämtliche Polyetherdiole der Komponente c) ausgewählt sind aus solchen, für die die Summe der ganzen natürlichen Zahlen p und q gemäß allgemeiner Strukturformel (I) nicht größer als 20, vorzugsweise nicht größer als 15, und nicht kleiner als 5 ist, wobei die ganze natürliche Zahl n den Wert Null annimmt.

Durch letztere Bedingung werden solche erfindungsgemäßen Zusammensetzungen erhalten, die auf Metallband aufgetragen im kondensierten bzw. getrockneten Zustand dem Metallband sowohl eine genügende Korrosionsbeständigkeit für die Zwecke der Lagerung und des Transportes als auch die erforderliche Umformbarkeit in Tiefziehprozessen verleihen.

Der massenbezogene Gesamtanteil der Polydiole gemäß der Komponente c) an der erfindungsgemäßen Wasser enthaltenden Zusammensetzung beträgt vorzugsweise zumindest 15 Gew.-%, aber ist vorzugsweise nicht größer als 25 Gew.-%. Unterhalb der erfindungsgemäßen 5 Gew.-% an Polydiolen ist eine ausreichende Umformbarkeit der auf Metallband aufgebrachten und kondensierten Zusammensetzung nicht mehr gegeben. Umgekehrt wird bei einem Gewichtsanteil oberhalb der erfindungsgemäßen 40 Gew.-% an Polydiolen keine vollständige Kondensation mit den Organosilanen erzielt, so dass Beschichtungen aus solchen Zusammensetzungen eine nur geringe Korrosionsbeständigkeit verleihen und gleichzeitig die Schmierwirkung vermittelt durch den Überschuss an Polydiolen zu stark ausgeprägt ist, so dass der Transport von beschichteten und gestapelten oder aufgewickelten Metallband erschwert wird.

Der für die Stabilisierung der erfindungsgemäßen Zusammensetzung notwendige einwertige Alkohol gemäß Komponente d) ist vorzugsweise ausgewählt aus Methanol, Ethanol, Propanol und/oder Butanol, besonders bevorzugt aus Methanol und/oder Ethanol wegen der niedrigeren Trockentemperaturen während der Aushärtung einer Beschichtung der erfindungsgemäßen Zusammensetzung, insbesondere bevorzugt aus Ethanol, da beim Eintrocknen der Zusammensetzung auf Metallband das hinsichtlich der Betriebsund Umweltsicherheit weniger toxische Ethanol freigesetzt wird.

Der massenbezogene Gesamtanteil der Alkohole gemäß Komponente d) an der Zusammensetzung beträgt erfindungsgemäß zumindest 25 Gew.-%, so dass eine Stabilität der Zusammensetzung über Wochen und Monate garantiert ist. Der maximale Anteil an Alkoholen gemäß Komponente d) wird dabei lediglich durch die bevorzugten Mindestanteile der anderen Komponenten a)-c) und Wasser bestimmt. So sind in den erfindungsgemäßen Zusammensetzungen für eine vollständige Hydrolyse der Organosilane a) und b) vorzugsweise zumindest eine stöchiometrische Menge Wasser, oder vorzugsweise zumindest 10 Gew.-% an Wasser enthalten, aber vorzugsweise nicht mehr als 25 Gew.-% an Wasser, da bei höheren Wasseranteilen eine sofortige Kondensation der Komponenten a)-c) einsetzt.

Insgesamt sind solche Wasser enthaltende Zusammensetzungen bevorzugt, die die folgenden Komponenten a)-d) in den folgenden massenbezogenen Gewichtsanteilen enthalten, wobei vorzugsweise zusätzlich eine oder mehrere der zuvor näher ausgeführten Bedingungen hinsichtlich der Komponenten a)-d) erfüllt vorliegen können:

| | | |
|---|---|---|
| a) | 10-30 Gew.% | mindestens eines Organosilans mit mindestens einer Amino-Funktion, vorzugsweise Aminopropyltriethoxysilan, |
| b) | 10-30 Gew.-% | Methacryl-substituierte Organosilane, |
| c) | 5-25 Gew.% | Polydiole ausgewählt aus Polyetherdiolen, Polyesterdiolen und/oder Polycarbonatdiolen, vorzugsweise aus Polyetherdiolen gemäß der Strukturformel (I), insbesondere bevorzugt aus Polyethylen- und/oder Polypropylenglykole |
| d) | 25-50 Gew.-% | Methanol und/oder Ethanol |

In weiteren Ausführungsformen kann die Wasser enthaltende Zusammensetzung zusätzlich als Komponente e) Korrosionsinhibitoren enthalten, die vorzugsweise ausgewählt sind aus Organophosphonsäuren, Organophosphorsäuren, schwefelhaltigen Heterozyklen, Mercaptanen, Benzimidazolen und/oder unlöslichen Metallphosphaten, vorzugsweise Organophosphonsäuren, Organophosphorsäuren, schwefelhaltigen Heterozyklen und/oder Mercaptanen, wobei der massenbezogene Gesamtanteil der Korrosionsinhibitoren nicht größer als 10 Gew.-%, vorzugsweise nicht größer als 5 Gew.-% ist. Ferner sind solche Inhibitoren bevorzugt, die über keine mit den Komponenten a)-c) der Wasser enthaltenden Zusammensetzung vernetzenden funktionalen Gruppen aufweisen. Inhibitoren mit langen apolaren organischen Seitenketten, die dennoch wasserlöslich sind, sind daher besonders bevorzugt, bspw. bisalkylierte Phosphorsäuren und schwefelhaltige Inhibitoren, die zusätzlich die Umformbarkeit von Metallband beschichtet mit der getrockneten Zusammensetzung verbessern.

Dem Fachmann ist klar, dass die erfindungsgemäßen, die Komponenten a)-c) der Wasser enthaltenden Zusammensetzungen komplexe Hydrolyse- und Kondensationsreaktionen miteinander eingehen und dabei stabile kolloidale Sole bilden. Das Vorliegen einer erfindungsgemäßen Zusammensetzungen kann sich daher nicht auf das Vorliegen der Einzelkomponenten als solche in den Wasser enthaltenden Zusammensetzungen beschränken, sondern umfasst selbstverständlich auch die reale Zusammensetzung des kolloidalen Sols, welches durch Vermengen der Einzelkomponenten erhältlich ist.

Die erfindungsgemäßen Zusammensetzungen enthalten vorzugsweise jedoch neben der Komponente c) keine weiteren organischen Polymere, deren Grundgerüst keine Silizium-Atome aufweist. Insbesondere enthalten die erfindungsgemäßen Zusammensetzungen neben Wasser und den Komponenten a)-e) nicht mehr als 1 Gew.-%, besonders bevorzugt nicht mehr als 0,1 Gew.-% zusätzliche Bestandteile.

In einem weiteren Aspekt betrifft die vorliegende Erfindung ein Verfahren zur Aufbringung einer korrosionsschützenden Beschichtung auf metallischen Oberflächen, insbesondere Metallband, wobei die metallische Oberfläche
i) ggf. gereinigt und entfettet wird,
ii) mit einem Nassfilm einer Wasser enthaltenden Zusammensetzung umfassend
   a) mindestens ein Organosilan mit ein bis drei in Wasser hydrolysierbaren Substituenten und ein bis drei in Wasser nicht hydrolysierbaren Substituenten, wobei zumindest ein nicht hydrolysierbarer Substituent zumindest eine Amino-Funktion aufweist und die Gesamtzahl der Substituenten am Siliziumatom der Organosilane 4 ist,
   b) mindestens ein Organosilan mit ein bis drei in Wasser hydrolysierbaren Substituenten und ein bis drei in Wasser nicht hydrolysierbaren Substituenten, die keine Organosilane gemäß Komponente a) sind, wobei die Gesamtzahl der Substituenten am Siliziumatom der Organosilane der Komponente b) 4 ist und wobei die in Wasser hydrolysierbaren Substituenten der Organosilane der Komponente b) ausgewählt sind aus Alkoxygruppen und/oder Halogenatomen und die in Wasser nicht hydrolysierbaren Substituenten der Organosilane der Komponente b) ausgewählt sind aus Alkyl- und/oder Arylgruppen und/oder Fluoroalkylgruppen und/oder Fluoroarylgruppen, wobei zumindest ein nicht hydrolysierbarer Substituent Methacryl-substituiert ist,
   c) zumindest 5 Gew.%, aber nicht mehr als 40 Gew.% mindestens eines Polydiols ausgewählt aus Polyetherdiolen, Polyesterdiolen und/oder Polycarbonatdiolen,
   d) zumindest 25 Gew.% mindestens einen einwertigen Alkohol mit einer Molmasse von weniger als 100 g/mol,
   wobei das molare Verhältnis von Komponenten a) zu Komponenten b) nicht kleiner als 1 : 1, aber nicht größer als 3 : 1 ist und der Gesamtanteil an Komponenten a) und b) an der Zusammensetzung zumindest 10 Gew.%, aber nicht mehr als 60 Gew.% beträgt, versehen wird, und
iii) der im Schritt ii) auf der metallischen Oberfläche aufgebrachte Nassfilm getrocknet wird, vorzugsweise bei Atmosphärendruck oberhalb einer Temperatur von 15 °C, vorzugsweise oberhalb von 30 °C, aber unterhalb einer Temperatur von 200 °C, besonders bevorzugt unterhalb von 100 °C.

Die in diesem erfindungsgemäßen Verfahren aufgebrachte Wasser enthaltende Zusammensetzung, kann dabei gemäß den zuvor angegebenen Spezifikationen vorliegen.

Das Aufbringen der kondensierbaren, Wasser enthaltenen Zusammensetzung auf die Metalloberfläche, insbesondere auf ein Metallband, im Schritt ii) des erfindungsgemäßen Verfahrens erfolgt in an sich bekannter Weise durch Walzenauftragsverfahren (Chem-Coating), Abstreifen, Tauchen/Abquetschen oder Spritzen/Abquetschen. Die Anwendung erfolgt bei den im Schritt iii) angegebenen Temperaturen. Die Temperatur kann durch Wärmezufuhr über das Werkstück oder über die Zusammensetzung eingestellt werden. Anschließend findet durch geeignete Wärmezuführung gleichzeitig die Bildung eines Nassfilms und die Vernetzung bzw. Kondensation dieses Nassfilms enthaltend ein kolloidales Sol der Reaktionskomponenten a)-c) zu einer homogenen Beschichtung statt. Hierzu sind während einer Zeitdauer zwischen 1 und 60 Sekunden, vorzugsweise zwischen 1 und 30 Sekunden, Peak-Metal-Temperaturen (PMT) von 15 bis 200 °C, vorzugsweise von 30 bis 100 °C zu erreichen.

Unter Trocknung ist in diesem Zusammenhang ein zeitlich begrenzter Prozess zu verstehen, während dessen die bei der Hydrolyse und Kondensation der Bestandteile einer erfindungsgemäßen Zusammensetzung gebildeten niedermolekularen Alkohole aus dem Nassfilm nahezu vollständig entfernt werden. Ein solcher Trocknungsprozess kann durch Erhöhung der Temperatur, insbesondere der Temperatur der Metalloberfläche ("Peak Metal Temperature") beschleunigt werden. Aus Gründen der breiten Anwendbarkeit, der Produktionsgeschwindigkeit und des Energieverbrauchs bei der Behandlung von Metallband zeichnen sich die erfindungsgemäßen Zusammensetzungen dadurch aus, dass sie bereits bei niedrigen Temperaturen und als Dünnfilm auf eine Metalloberfläche aufgetragen vollständig vernetzen, d.h. in einem kurzem Zeitintervall unter Ausbildung einer Beschichtung mit geringer Gleitreibung und guten temporären Korrosionsschutzeigenschaften trocknen. Die im Schritt iii) des erfindungsgemäßen Verfahrens genannten Trocknungstemperaturen sind dabei die Substrattemperaturen ("Peak Metal Temperature") des Metallsubstrats mit der aufgetragenen Zusammensetzung.

Dem Schritt iii) des erfindungsgemäßen Verfahren können mit oder ohne dazwischenliegenden Verfahrensschritten, bspw. Reinigungs- und Spülschritte, weitere Schritte zur Aufbringung einer polymeren organischen Beschichtung, insbesondere von thermisch oder aktinisch härtenden Lacksystemen folgen.

Bevorzugt ist weiterhin, dass die Zusammensetzung im Schritt ii) des erfindungsgemäßen Verfahrens in einer solchen Nassfilmdicke aufgebracht wird, dass die Trockenfilmdicke der Beschichtung nach Schritt iii) nicht größer als 5 µm, besonders bevorzugt nicht größer als 2 µm ist. Größere Trockenfilmdicken der vernetzten erfindungsgemäßen Zusammensetzung, die in Walzenauftragsverfahren aufgebracht werden, weisen üblicherweise eine höhere Anzahl an Schichtdefekten auf, die nachteilig für den Korrosionsschutz sind, so dass Trockenfilmdicken oberhalb von 10 µm in einem Verfahren gemäß vorliegender Erfindung nicht hergestellt werden. Andererseits ist eine Mindesttrockenfilmdicke von zumindest 1 µm vorzugsweise einzustellen, da ansonsten eine zu geringe Korrosionsbeständigkeit und eine nur unzureichend ausgeprägte Umformbarkeit der beschichteten Metalloberfläche resultieren.

Das erfindungsgemäße Verfahren kann insbesondere durch die physikalischen Schichteigenschaften charakterisiert werden. Demnach sind solche Verfahren bevorzugt, nach deren Durchführung metallische Oberflächen derart mit einer getrockneten erfindungsgemäßen Zusammensetzung beschichtet vorliegen, dass im Erichsen Tiefziehtest nach DIN EN 1669 eine maximale Niederhalterkraft bei einer Ziehtiefe von 33 mm und einer Ziehgeschwindigkeit von 0,1 cm pro Sekunde von zumindest 100 kN gemessen wird.

Die im erfindungsgemäßen Verfahren behandelten Metalloberflächen sind vorzugsweise ausgewählt aus Oberflächen von Eisen, Zink, Aluminium und/oder Magnesium sowie deren Legierungen, vorzugsweise von Eisen und Zink sowie deren Legierungen untereinander oder deren Legierungen mit Magnesium oder Aluminium.

Ein metallisches Band kann in einem erfindungsgemäßen Verfahren wie zuvor definiert beschichtet werden.

### Beispiele:

Erfindungsgemäße Zusammensetzungen verleihen als auf Metallband getrocknete, kondensierte Beschichtung eine gute Korrosionsbeständigkeit und insbesondere eine hervorragende Umformbarkeit. Darüber hinaus trocknen erfindungsgemäße Zusammensetzungen bereits bei niedrigen Temperaturen und bilden dabei eine vollständig kondensierte und hoch vernetzte Beschichtung, so dass erfindungsgemäße Zusammensetzung sich bestens für die Nassfilmapplikation bei der "In-line Herstellung" von Metallband eignen, bei der eine hohe Bandgeschwindigkeit von mehreren Metern pro Sekunde in der Walzstrasse eine schnelle Trocknung der applizierten Zusammensetzung erfordert.

In den Tabellen 1 und 2 sind beispielhaft Zusammensetzungen aufgeführt, die den erfindungsgemäß geforderten Eigenschaften der Beschichtung und der Zusammensetzung genügen. Die dort aufgelisteten Zusammensetzungen wurden in definierter Nassfilmdicke auf Kaltbandstahlblech (DC04A) durch Rakeln aufgebracht, so dass ein Schichtgewicht des Nassfilms von 5 g/m² resultierte. Nach Trocknung des aufgerakelten Nassfilms bei 80 °C im Umluftofen wurden die Eigenschaften der kondensierten Beschichtung bezüglich Korrosionsbeständigkeit, Umformbarkeit, Hydrolysebeständigkeit und Lackhaftung entsprechend der in den Tabellen gekennzeichneten Tests geprüft.

So zeigt eine erfindungsgemäße Mischung B1 enthaltend Aminopropyltriethoxysilan, Methacryloxypropyltriethoxysilan und Polyethylenglykol (Mn = 300 g/mol) als getrocknete, kondensierte Beschichtung auf Kaltbandstahlblechen bereits eine sehr gute Umformbarkeit im Erichsentiefziehtest dokumentiert durch eine maximale Niederhalterkraft von 100 kN bei einer Ziehtiefe von 33 mm und einer Ziehgeschwindigkeit von 0,1 cm pro Sekunde. Zudem verleiht eine Beschichtung mit einer Zusammensetzung B1 bereits einen ausreichenden temporären Schutz vor Korrosion wie durch den Schwitzwassertest unter Wechselklimabedingungen (KFW-Test nach DIN EN ISO 6270-2) gezeigt werden kann, bei dem erst nach 7 Zyklen Rotrostbildung auf den beschichteten Blechen beobachtet wird. Die Zusammensetzung selbst weist zusätzlich die geforderte kurze Trocknungszeit unterhalb von 10 Sekunden bei 80 °C auf.

Die nicht-erfindungsgemäßen Zusammensetzungen VB2 und VB3 enthaltend anstelle des Aminosilans Methacryloxypropyltriethoxysilan bzw. Glycidyloxypropyltriethoxysilan weisen als Beschichtung auf dem Stahlblechen zwar eine hervorragende Korrosions- und Hydrolysebeständigkeit und im Falle des Methacryloxypropyltriethoxysilans auch eine gute Lackhaftung auf, jedoch ist eine hinreichende Umformbarkeit, die ein wesentlicher Teil der zu erfüllenden Aufgabe der vorliegenden Erfindung darstellt, nicht gegeben. Darüber hinaus können die Zusammensetzungen VB2-3, die kein Aminosilan enthalten, nicht innerhalb von 10 Sekunden als Nassfilm auf dem Stahlblech getrocknet bzw. vollständig vernetzt werden, so dass ein weiterer entscheidender Nachteil dieser Zusammensetzungen im Vergleich zur erfindungsgemäßen Zusammensetzung deutlich wird.

Die erfindungsgemäßen Beispiele B1-B5 zeigen zum einen den Vorteil von Zusammensetzungen, die neben dem Aminosilan als Komponente a) ein weiteres Silan als Komponente b) enthalten, und belegen zusätzlich die Wirkung des Verhältnisses der Anteile dieser Komponenten in der Zusammensetzung. So sind Zusammensetzungen, die Methacryloxypropyltriethoxysilan als Komponente b) enthalten, grundsätzlich besser für die Bereitstellung einer hohen Korrosionsbeständigkeit bei gleich bleibend guter Umformbarkeit der beschichteten Stahlbleche geeignet (B1-B3). Übersteigt der Anteil an Methacryloxypropyltriethoxysilan jedoch einen kritischen Wert, werden keine stabilen kolloidalen Sole erhalten werden, und die Zusammensetzung (B4, B5) wird als ganzes instabil, so dass sehr kurze Topfzeiten resultieren. Derartige Zusammensetzungen (B4, B5) enthaltend hohe Anteile an Methacryloxypropyltriethoxysilan erfordern ihre Formulierung unmittelbar vor der Applikation auf das Metallband und sind daher nicht praktikabel. Im Optimum der hier aufgezeigten Ausführungsbeispiele B1-B5 können mit erfindungsgemäßen Zusammensetzungen getrocknete und kondensierte Beschichtungen auf Stahlblechen erzeugt werden, die im Schwitzwassertest erst nach 30 Zyklen erste Anzeichen von Rotrost aufweisen und im Gitterschnitt-Test nach EN DIN ISO 2409 keine Anzeichen von Enthaftung zeigen (siehe Ausführungsbeispiel B3).

Die erfindungsgemäßen Ausführungsbeispiele B6-B9 belegen den Einfluss des Anteils der Polydiole an der Zusammensetzung. So kann durch einen hohen Anteil an Polyethylenglykol von (B6: 30 Gew.-% PEG, Mn = 300 g/mol) in der Zusammensetzung die Umformbarkeit der getrockneten Beschichtung zwar signifikant erhöht werden, allerdings erhöhen sich damit tendentiell auch die Trocknungszeiten (B6: >10 Sekunden). Die Korrosionsbeständigkeit der getrockneten Beschichtung bleibt bei nahezu gleich bleibendem Anteil an Organosilanen vom Anteil des Polydiols in der Zusammensetzung unbeeinflusst (B6-B9: > 30 Zyklen bis Rotrostbildung).

Die in der Tabelle 2 zusammengefassten Beispiele B10-B14 enthalten die Komponenten a)-e) zu stets gleichen Anteilen, wobei allerdings die Kettenlänge des Polyethylenglykols und der Ethoxylierungsgrad des Aminosilans variiert wird.

So zeigt sich, dass erfindungsgemäße Zusammensetzungen nach vollständiger Trocknung bei 80 °C als Beschichtung auf dem Stahlblech mit steigender Kettenlänge der Polydiole eine erhöhte Umformbarkeit des Metallblechs im Erichsen Tiefziehtest bewirken. Die erhöhte mechanische Flexibilität der getrockneten Beschichtung bedingt jedoch offensichtlich auch einen Verlust in der Korrosionsbeständigkeit (B12: 25 Zyklen bis Rotrostbildung / Niederhalterkraft 120 kN).

Eine hohe Umformbarkeit kann allerdings bei gleich bleibend guter Korrosionsbeständigkeit im Schwitzwassertest dadurch erzielt werden, dass diethoxylierte Aminosilane in den erfindungsgemäßen Zusammensetzungen eingesetzt werden (B13, B14).

| Tab. 1 Einfluss der Organosilane gemäß den Komponenten a) und b) und des Polyetherdiolgehaltes der erfindungsgemäßen Zusammensetzung auf die Korrosionsbeständigkeit und das Umformverhalten einer getrockneten, kondensierten Beschichtung von Zusammensetzungen B1-B9 und VB1-VB3 mit einem Trockenschichtgewicht von 2 gl/m² auf unverzinktem Kaltblech (DC04A) | | | | | | | | | | |
|---|---|---|---|---|---|---|---|---|---|---|
| | Komponenten in Gew.-% | | | | | Korrosionsbeständigkeit # | Umformbarkeit * | Trocknung^{x} | Hydrolysestabilität ^{Y} | Lackhaftung ^{Z} |
| | a,b) Organosilane; c) Polyetherdiol; d) Ethanol | | | | | KFW | Niederhalterkraft | Trockenzeit | Δ Si-Auflage = 0 | GT=0 |
| | a)¹ | b)^{2,3} | c)⁴ | d) | Wasser | Anzahl Zyklen | kN | unter 10 s | | |
| VB1 | 30 | - | 17 | 25 | 20 | 7 | 100 | ja | nein | nein |
| VB2 | - | 30 | 17 | 25 | 20 | >30 | 60 | nein | ja | ja |
| VB3 | - | 30 | 17 | 25 | 20 | >30 | 70 | nein | ja | nein |
| B1 | 22,5 | 7,5 | 20 | 25 | 22 | 7 | 120 | ja | nein | nein |
| B2 | 20 | 10 | 20 | 25 | 22 | 12 | 100 | ja | nein | nein |
| B3 | 15 | 15 | 20 | 25 | 22 | >30 | 100 | ja | ja | ja |
| B4 | 10 | 20 | 20 | 25 | 22 | k.A. | k.A. | k.A. | k.A. | k.A. |
| B5 | 7,5 | 22,5 | 20 | 25 | 22 | k.A. | k.A. | k.A. | k.A. | k.A. |
| B6 | 16,9 | 16,9 | 30 | 25 | 11,2 | >30 | 160 | nein | k.A. | ja |
| B7 | 18,75 | 18,75 | 22,5 | 25 | 15 | >30 | 100 | ja | k.A. | nein |
| B8 | 16,9 | 16,9 | 18,7 | 25 | 22,5 | >30 | 100 | ja | k.A. | ja |
| B9 | 18,75 | 18,75 | 15 | 25 | 22,5 | >30 | 40 | ja | k.A. | nein |

| | | | | | | | | | | |
|---|---|---|---|---|---|---|---|---|---|---|
| 1: Aminopropyltriethoxysilan 2: Methacryloxypropyltriethoxysilan 3: Glycidyloxypropyltriethoxysilan 4: PEG, m = o = 2, n = 0, p + q = 6 gemäß Strukturformel (I) # nach DIN EN ISO 6270-2; * Erichsen Tiefziehtest nach DIN EN 1669 bei einer Ziehtiefe von 33 mm und einer Ziehgeschwindigkeit von 0,1 cm pro Sekunde X Trocknungszeit eines Nassfilms von ca. 5 g/m² der Zusammensetzung auf Kaltblech (DC04) im Umluftofen bei 80 °C gemäß Anpresstest mit Kaltblech (DC04) Y positiv beurteilt, wenn keine Veränderung der Silizium-Auflage (Δ Si-Auflage = 0) bestimmt mittels Röntgenfluoreszenzanalyse nach Auslagerung der getrockneten Beschichtung in entionisiertem Wasser für die Dauer von einer Stunde vorliegt Z nach Gitterschnitt-Methode B nach EN DIN ISO 2409; GT=0: Schnittränder sind glatt / keines der Gitterquadrate ist abgeplatzt | | | | | | | | | | |

| Tab. 2 Einfluss des Ethoxylierungsgrades der Organosilane gemäß der Komponente a) und der Kettenlänge des Polyetherdiols gemäß der Komponente b) der erfindungsgemäßen Zusammensetzung auf die Korrosionsbeständigkeit und das Umformverhalten einer kondensierten Beschichtung von Zusammensetzungen B10-B14 mit einem Trockenschichtgewicht von 2 g/m² auf unverzinktem Kaltblech (DC04A) | | | | | | | | | | |
|---|---|---|---|---|---|---|---|---|---|---|
| | Komponenten in Gew.-% | | | | | Korrosionsbeständigkeit # | Umformbarkeit * | Trocknung ^{x} | Hydrolysestabilität ^{Y} | Lackhaftung^{z} |
| | a, b) Organosilane; c) PEG; d) Ethanol 20,8 Gew.-% Wasser | | | | | KFW | Niederhalterkraft | Trockenzeit | Δ Si-Auflage = 0 | GT=0 |
| | a)^{1,2} | b)³ | c)^{4,5,6} | d)⁷ | e)⁸ | Anzahl Zyklen | kN | unter 10 s | | |
| B10^{1,4} | 15,5 | 15,5 | 17,2 | 24,8 | 6,2 | >30 | 40 | ja | ja | ja |
| B11^{1,5} | 15,5 | 15,5 | 17,2 | 24,8 | 6,2 | >30 | 100 | ja | ja | ja |
| B12^{1,6} | 15,5 | 15,5 | 17,2 | 24,8 | 6,2 | 25 | 120 | ja | ja | ja |
| B13 2,4 | 15,5 | 15,5 | 17,2 | 24,8 | 6,2 | >30 | 80 | ja | ja | ja |
| B14^{2,5} | 15,5 | 15,5 | 17,2 | 24,8 | 6,2 | >30 | 120 | ja | ja | ja |

| | | | | | | | | | | |
|---|---|---|---|---|---|---|---|---|---|---|
| 1: Aminopropyltriethoxysilan 2: Aminopropylmethyldiethoxysilan 3: Methacryloxypropyltriethoxysilan Polyethylenglykol mit m = o = 2, n = 0, sowie 4: p + q = 4 oder 5: p + q = 6 oder 6: p + q = 8 gemäß Strukturformel (I) 7: Ethanol 8: Bis-(2-ethylhexyl)-phosphorsäure # nach DIN EN ISO 6270-2; * nach DIN EN 1669 X Trocknungszeit eines Nassfilms von ca. 5 g/m² der Zusammensetzung auf Kaltblech (DC04) im Umluftofen bei 80 °C gemäß Anpresstest mit Kaltblech (DC04) Y positiv beurteilt, wenn keine Veränderung der Silizium-Auflage (Δ Si-Auflage = 0) bestimmt mittels Röntgenfluoreszenzanalyse nach Auslagerung der getrockneten Beschichtung in entionisiertem Wasser für die Dauer von einer Stunde vorlegt Z nach Gitterschnitt-Methode B nach EN DIN ISO 2409; GT=0: Schnittränder sind glatt / keines der Gitterquadrate ist abgeplatzt | | | | | | | | | | |

## Patentansprüche

1. Wasser enthaltende Zusammensetzung umfassend
a) mindestens ein Organosilan mit ein bis drei in Wasser hydrolysierbaren Substituenten und ein bis drei in Wasser nicht hydrolysierbaren Substituenten, wobei zumindest ein nicht hydrolysierbarer Substituent zumindest eine Amino-Funktion aufweist und die Gesamtzahl der Substituenten am Siliziumatom der Organosilane 4 ist,
b) mindestens ein Organosilan mit ein bis drei in Wasser hydrolysierbaren Substituenten und ein bis drei in Wasser nicht hydrolysierbaren Substituenten, die keine Organosilane gemäß Komponente a) sind, wobei die Gesamtzahl der Substituenten am Siliziumatom der Organosilane der Komponente b) 4 ist und wobei die in Wasser hydrolysierbaren Substituenten der Organosilane der Komponente b) ausgewählt sind aus Alkoxygruppen und/oder Halogenatomen und die in Wasser nicht hydrolysierbaren Substituenten der Organosilane der Komponente b) ausgewählt sind aus Alkyl- und/oder Arylgruppen und/oder Fluoroalkylgruppen und/oder Fluoroarylgruppen, wobei zumindest ein nicht hydrolysierbarer Substituent Methacryl-substituiert ist,
c) zumindest 5 Gew.%, aber nicht mehr als 40 Gew.-% mindestens eines Polydiols ausgewählt aus Polyetherdiolen, Polyesterdiolen und/oder Polycarbonatdiolen,
d) zumindest 25 Gew.-% mindestens einen einwertigen Alkohol mit einer Molmasse von weniger als 100 g/mol,
wobei das molare Verhältnis von Komponenten a) zu Komponenten b) nicht kleiner als 1 : 1, aber nicht größer als 3 : 1 ist und der Gesamtanteil an Komponenten a) und b) an der Zusammensetzung zumindest 10 Gew.-%, aber nicht mehr als 60 Gew.-%beträgt.

2. Wasser enthaltende Zusammensetzung gemäß Anspruch 1, **dadurch gekennzeichnet, dass** die in Wasser hydrolysierbaren Substituenten der Organosilane der Komponente a) ausgewählt sind aus Alkoxygruppen, bevorzugt Methoxy- und/oder Ethoxygruppen, und/oder Halogenatomen, bevorzugt Chloratomen, und die in Wasser nicht hydrolysierbaren Substituenten der Organosilane der Komponente a) ausgewählt sind aus Alkyl-Gruppen, wobei zumindest ein nicht hydrolysierbarer Substituent eine Amino-Gruppe aufweist.

3. Wasser enthaltende Zusammensetzung gemäß einem oder mehreren der vorherigen Ansprüche, **dadurch gekennzeichnet, dass** das molare Verhältnis von Komponenten a) zu Komponenten b) nicht kleiner als 5 : 4 und nicht größer als 2 : 1 ist.

4. Wasser enthaltende Zusammensetzung gemäß einem oder mehreren der vorherigen Ansprüche, **dadurch gekennzeichnet, dass** der massenbezogene Gesamtanteil der Organosilane gemäß den Komponenten a) und b) an der Zusammensetzung nicht kleiner als 30 Gew.-%, aber einen Gesamtanteil von 50 Gew-% nicht überschreitet.

5. Wasser enthaltende Zusammensetzung gemäß einem oder mehreren der vorherigen Ansprüche, **dadurch gekennzeichnet, dass** die Polydiole der Komponente c) ausgewählt sind aus Polyetherdiolen der allgemeinen Formel (I) 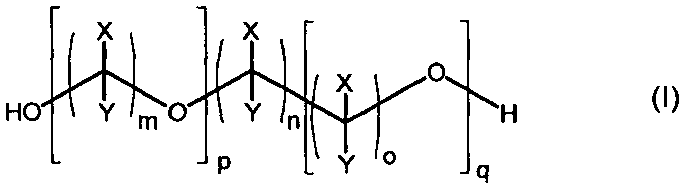 wobei die Reste X, Y jeweils unabhängig voneinander ausgewählt sind aus Wasserstoff, Fluor, Alkyl- oder Fluoroalkyl-Gruppen mit nicht mehr als 6 Kohlenstoff-Atomen,
wobei m und o ganze natürliche Zahlen größer als Null, aber nicht größer als 4 sind,
wobei n eine ganze natürliche Zahl nicht größer als 30 ist,
wobei p und q ganze natürliche Zahlen größer als Null, aber nicht größer als 30 sind.

6. Wasser enthaltende Zusammensetzung gemäß Anspruch 5, **dadurch gekennzeichnet, dass** zumindest 50 Gew.-% aller Polyetherdiole, vorzugsweise sämtliche Polyetherdiole der Komponente c) ausgewählt sind aus solchen, für die die Summe der ganzen natürlichen Zahlen p und q gemäß allgemeiner Strukturformel (I) nicht größer als 20, vorzugsweise nicht größer als 15, und nicht kleiner als 5 ist, wobei die ganze natürliche Zahl n den Wert Null annimmt.

7. Wasser enthaltende Zusammensetzung gemäß einem oder mehreren der vorherigen Ansprüche, **dadurch gekennzeichnet, dass** der massenbezogene Gesamtanteil der Polydiole gemäß der Komponente c) an der Zusammensetzung zumindest 15 Gew.-% beträgt, aber nicht größer als 25 Gew.-% ist.

8. Wasser enthaltende Zusammensetzung gemäß einem oder mehreren der vorherigen Ansprüche, **dadurch gekennzeichnet, dass** die Alkohole gemäß Komponente d) ausgewählt sind aus Methanol, Ethanol, Propanol und/oder Butanol, vorzugsweise aus Methanol und/oder Ethanol.

9. Wasser enthaltende Zusammensetzung gemäß einem oder mehreren der vorherigen Ansprüche, **dadurch gekennzeichnet, dass** der massenbezogene Gesamtanteil an Wasser an der Zusammensetzung zumindest 10 Gew.% beträgt, aber nicht größer als 25 Gew.-% ist.

10. Wasser enthaltende Zusammensetzung gemäß einem oder mehreren der vorherigen Ansprüche, **dadurch gekennzeichnet, dass** die Zusammensetzung die folgenden Komponenten a)-d) in den folgenden massenbezogenen Gewichtsanteilen enthält:
a) 10-30 Gew.-% mindestens eines Organosilans mit mindestens einer Amino-Funktion, vorzugsweise Aminopropyltriethoxysilan
b) 10-30 Gew.-% Methacryl-substituierte Organosilane,
c) 5-25 Gew.-% Polydiole ausgewählt aus Polyetherdiolen, Polyesterdiolen und/oder Polycarbonatdiolen, vorzugsweise aus Polyetherdiolen gemäß der Strukturformel (I), insbesondere bevorzugt aus Polyethylen- und/oder Polypropylenglykole
d) 25-50 Gew.-% Methanol und/oder Ethanol

11. Wasser enthaltende Zusammensetzung gemäß einem der vorherigen Ansprüche, **dadurch gekennzeichnet, dass** die Zusammensetzung neben der Komponente c) keine weiteren organischen Polymere enthält, deren Grundgerüst keine Silizium-Atome aufweist.

12. Wasser enthaltende Zusammensetzung gemäß einem der vorherigen Ansprüche, **dadurch gekennzeichnet, dass** in der Zusammensetzung neben Wasser und den Komponenten a)-d) zusätzlich nicht mehr als 10 Gew.-% Korrosionsinhibitoren enthalten sind, wobei nicht mehr als 1 Gew.-%, vorzugsweise nicht mehr als 0,1 Gew.-% zusätzliche Bestandteile neben den Komponenten a)-e) enthalten sind.

13. Verfahren zur Aufbringung einer korrosionsschützenden Beschichtung auf metallischen Oberflächen, **dadurch gekennzeichnet, dass** die metallische Oberfläche
i) ggf. gereinigt und entfettet wird,
ii) mit einem Nassfilm einer Zusammensetzung gemäß einem oder mehreren der vorherigen Ansprüche versehen wird, und
iii) der im Schritt ii) auf der metallischen Oberfläche aufgebrachte Nassfilm getrocknet wird, vorzugsweise bei Atmosphärendruck oberhalb einer Temperatur von 15 °C, aber unterhalb einer Temperatur von 200 °C, besonders bevorzugt unterhalb von 100 °C.

## Claims

1. A composition containing water, comprising
a) at least one organosilane with 1 to 3 water-hydrolyzable substituents and with 1 to 3 water non-hydrolyzable substituents, wherein at least one non-hydrolyzable substituent has at least one amino function and the total number of substituents on the silicon atom of the organosilanes is 4,
b) at least one organosilane with 1 to 3 water-hydrolyzable substituents and with 1 to 3 water non-hydrolyzable substituents, which are not organosilanes according to component a), wherein the total number of substituents on the silicon atom of the organosilanes of component b) is 4, and wherein the water-hydrolyzable substituents of the organosilanes of component b) are selected from alkoxy groups and/or halogen atoms and the water non-hydrolyzable substituents of the organosilanes of component b) are selected from alkyl and/or aryl groups and/or fluoroalkyl groups and/or fluoroaryl groups, wherein at least one non-hydrolyzable substituent is substituted with a methacryl group,
c) at least 5% by weight, but not more than 40% by weight of at least one polydiol selected from polyether diols, polyester diols and/or polycarbonate diols,
d) at least 25% by weight of at least one monovalent alcohol with a molar mass of less than 100 g/mol,
wherein the molar ratio of components a) to components b) is not less than 1:1, but not greater than 3:1, and the total proportion of components a) and b) in the composition amounts to at least 10% by weight, but not more than 60% by weight.

2. The composition containing water according to claim 1, **characterized in that** the water-hydrolyzable substituents of the organosilanes of component a) are selected from alkoxy groups, preferably methoxy and/or ethoxy groups, and/or from halogen atoms, preferably chlorine atoms, and the water non-hydrolyzable substituents of the organosilanes of component a) are selected from alkyl groups, wherein at least one non-hydrolyzable substituent has an amino group.

3. The composition containing water according to one or more of the preceding claims, **characterized in that** the molar ratio of components a) to components b) is not less than 5:4 and not greater than 2:1.

4. The composition containing water according to one or more of the preceding claims, **characterized in that** the total mass-related proportion of the organic silanes according to components a) and b) of the composition is not less than 30% by weight, but does not exceed a total proportion of 50% by weight.

5. The composition containing water according to one or more of the preceding claims, **characterized in that** the polydiols of component c) are selected from polyether diols of general formula (I) 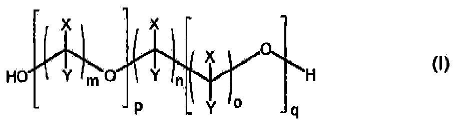 wherein the radicals X, Y are selected independently of each other from hydrogen, fluorine, alkyl or fluoroalkyl groups with no more than 6 carbon atoms,
m and o being natural integers greater than zero, but not greater than 4,
n being a natural integer not greater than 30,
p and q being natural integers greater than zero, but not greater than 30.

6. The composition containing water according to claim 5, **characterized in that** at least 50% by weight of all polyether diols, preferably all the polyether diols of component c) are selected from those for which the sum of the natural integers p and q according to the general structural formula (I) is not greater than 20, preferably not greater than 15, and not less than 5, the natural integer n receiving the value zero.

7. The composition containing water according to one or more of the preceding claims, **characterized in that** the total mass-related proportion of the polydiols according to component c) of the composition amounts to at least 15% by weight, but is not greater than 25% by weight.

8. The composition containing water according to one or more of the preceding claims, **characterized in that** the alcohols according to component d) are selected from methanol, ethanol, propanol and/or butanol, preferably from methanol and/or ethanol.

9. The composition containing water according to one or more of the preceding claims, **characterized in that** the total mass-related proportion of water of the composition amounts to at least 10% by weight, but is not greater than 25% by weight.

10. The composition containing water according to one or more of the preceding claims, **characterized in that** the composition contains the following components a)-d) in the following mass-related weight proportions:
a) 10-30% by weight of at least one organosilane with at least one amino function, preferably aminopropyltriethoxysilane,
b) 10-30% by weight of organosilanes substituted with methacryl groups,
c) 5-25% by weight of polydiols selected from polyether diols, polyester diols and/or polycarbonate diols, preferably from polyether diols according to the structural formula (I), more preferably from polyethylene glycols and/or polypropylene glycols,
d) 25-50% by weight of methanol and/or ethanol.

11. The composition containing water according to one of the preceding claims, **characterized in that** the composition in addition to component c) does not contain any further organic polymer, the basic backbone of which does not have any silicon atoms.

12. The composition containing water according to one of the preceding claims, **characterized in that** additionally not more than 10% by weight of the corrosion inhibitors are contained in the composition in addition to water and components a)-d), wherein not more than 1% by weight, preferably not more than 0.1% by weight of additional constituents are contained in addition to components a)-e).

13. A method for applying a corrosion-protective coating onto metal surfaces, **characterized in that** the metal surface
i) is optionally cleaned and degreased,
ii) is provided with a wet film of a composition according to one or more of the preceding claims, and
iii) the wet film applied on the metal surface in step ii) is dried, preferably at atmospheric pressure, at a temperature above 15°C, but at a temperature below 200°C, more preferably below 100°C,

## Revendications

1. Composition contenant de l'eau, comprenant
a) au moins un organosilane comprenant de un à trois substituants hydrolysables dans l'eau et de un à trois substituants non hydrolysables dans l'eau, au moins un substituant non hydrolysable présentant au moins une fonction amino, et le nombre total des substituants sur l'atome de silicium des organosilanes s'élevant à 4 ,
b) au moins un organosilane comprenant de un à trois substituants hydrolysables dans l'eau et de un à trois substituants non hydrolysables dans l'eau, qui ne représente pas un organosilane selon le composant a), le nombre total des substituants sur l'atome de silicium des organosilanes du composant b) s'élevant à 4, et les substituants hydrolysables dans l'eau des organosilanes du composant b) étant choisis parmi des groupes alcoxy et/ou des atomes d'halogène et les substituants non hydrolysables dans l'eau des organosilanes du composant b) étant choisis parmi des groupes alkyle et/ou aryle et/ou des groupes fluoroalkyle et/ou des groupes fluoroaryle, au moins un substituant non hydrolysable étant substitué avec un groupe méthacrylique ;
c) au moins 5 % en poids, mais pas plus de 40 % en poids d'au moins un polydiol choisi parmi des polyétherdiols, des polyesterdiols et/ou des polycarbonatediols ;
d) au moins 25 % en poids d'au moins un alcool monovalent dont la masse molaire est inférieure à 100 g/mol ;
dans laquelle le rapport molaire des composants a) aux composants b) n'est pas inférieur à 1 : 1, mais n'est pas supérieur à 3 : 1, et la fraction totale des composants a) et b) dans la composition représente au moins 10 % en poids, mais pas plus de 60 % en poids.

2. Composition contenant de l'eau selon la revendication 1, **caractérisée en ce que** les substituants hydrolysables dans l'eau des organosilanes du composant a) sont choisis parmi des groupes alcoxy, de préférence des groupes méthoxy et/ou éthoxy, et/ou des atomes d'halogène, de préférence des atomes de chlore, et les substituants non hydrolysables dans l'eau des organosilanes du composant a) sont choisis parmi des groupes alkyle, au moins un substituant non hydrolysable présentant un groupe amino.

3. Composition contenant de l'eau selon une ou plusieurs des revendications précédentes, **caractérisée en ce que** le rapport molaire des composants a) aux composants b) n'est pas inférieur à 5 : 4 et n'est pas supérieur à 2 : 1.

4. Composition contenant de l'eau selon une ou plusieurs des revendications précédentes, **caractérisée en ce que** la fraction totale, rapportée à la masse, des organosilanes, selon les composants a) et b) dans la composition, n'est pas inférieure à 30 % en poids, mais ne dépasse pas une fraction totale de 50 % en poids.

5. Composition contenant de l'eau selon une ou plusieurs des revendications précédentes, **caractérisée en ce que** les polydiols du composant c) sont choisis parmi des polyétherdiols répondant à la formule générale (I) 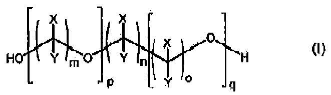 dans laquelle les résidus X, Y sont choisis, de manière respectivement indépendante, parmi un atome d'hydrogène, un atome de fluor, des groupes alkyle ou des groupes fluoroalkyle ne contenant pas plus de 6 atome de carbone,
dans laquelle m et o représentent des nombres entiers naturels qui sont supérieurs à zéro, mais qui ne sont pas supérieurs à 4 ;
dans laquelle n représente un nombre entier naturel qui n'est pas supérieur à 30 ;
dans laquelle p et q représentent des nombres entiers naturels qui sont supérieurs à zéro, mais qui ne sont pas supérieurs à 30.

6. Composition contenant de l'eau selon la revendication 5, **caractérisée en ce qu'**au moins 50 % en poids de tous les polyétherdiols, de préférence l'ensemble des polyétherdiols du composant c), sont choisis parmi des polyétherdiols pour lesquels la somme des nombres entiers naturels p et q conformément à la formule développée générale (I) n'est pas supérieure à 20, de préférence n'est pas supérieure à 15, et n'est pas inférieure à 5, le nombre entier naturel n prenant la valeur zéro.

7. Composition contenant de l'eau selon une ou plusieurs des revendications précédentes, **caractérisée en ce que** la fraction totale, rapportée à la masse, des polydiols selon le composant c) dans la composition s'élève à au moins 15 % en poids, mais n'est pas supérieure à 25 % en poids.

8. Composition contenant de l'eau selon une ou plusieurs des revendications précédentes, **caractérisée en ce que** les alcools selon le composant d) sont choisis parmi le méthanol, l'éthanol, le propanol et/ou le butanol, de préférence parmi le méthanol et/ou l'éthanol.

9. Composition contenant de l'eau selon une ou plusieurs des revendications précédentes, **caractérisée en ce que** la fraction totale, rapportée à la masse, de l'eau dans la composition, s'élève à au moins 10 % en poids, mais n'est pas supérieure à 25 % en poids.

10. Composition contenant de l'eau selon une ou plusieurs des revendications précédentes, **caractérisée en ce que** la composition contient les composants suivants a) - d) dans les fractions pondérales suivantes rapportées à la masse :
a) de 10 à 30 % en poids d'au moins un organosilane comprenant au moins une fonction amino, de préférence de l'aminopropyltriéthoxysilane ;
b) de 10 à 30 % en poids d'organosilanes substitués avec un ou plusieurs groupes méthacryliques ;
c) de 5 à 25 % en poids de polydiols choisis parmi des polyétherdiols, des polyesterdiols et/ou des polycarbonatediols, de préférence parmi des polyétherdiols répondant à la formule développée (I), de manière particulièrement préférée parmi des polyéthylèneglycols et/ou des polypropylèneglycols ;
d) de 25 à 50 % en poids de méthanol et/ou éthanol.

11. Composition contenant de l'eau selon une ou plusieurs des revendications précédentes, **caractérisée en ce que** la composition ne contient pas, à côté du composant c), d'autres polymères organiques dont la structure de base ne présente pas d'atomes de silicium.

12. Composition contenant de l'eau selon une ou plusieurs des revendications précédentes, **caractérisée en ce que** la composition ne contient pas, à côté de l'eau et des composants a) - d), plus de 10 % en poids d'inhibiteurs de la corrosion, ladite composition ne contenant pas plus de 1 % en poids, de préférence pas plus de 0,1 % en poids de constituants supplémentaires, à côté des composants a) - e)

13. Procédé pour l'application d'une enduction de protection contre la corrosion sur des surfaces métalliques, **caractérisé en ce qu'**ont soumet la surface métallique
i) éventuellement à un nettoyage et à un dégraissage ;
ii) on la munit d'un film humide d'une composition selon une ou plusieurs des revendications précédentes ; et
iii) on sèche le film humide appliqué à l'étape ii) sur la surface métallique, de préférence sous pression atmosphérique, à une température supérieure à 15 °C, mais à une température inférieure à 200 °C, de manière particulièrement préférée inférieure à 100 °C.
